# EUROPEAN PATENT APPLICATION

(11) **EP 2 424 250 A2**
(43) Date of publication of application: **29.02.2012**
(21) Application number: 11006626.3
(22) Date of filing: 11.08.2011
(51) Int. Cl.: H04N 13/00

(54) **Stereoscopic image processing device, method for processing stereoscopic image, and multivision display system**

(30) Priority: 24.08.2010 KR 20100081797
(71) Applicant: LG Electronics Inc., Seoul 150-721 (KR)
(72) Inventor: Ra, Joongmin, Seocho-gu Seoul 137-724 (KR); Moon, Seonghak, Seocho-gu Seoul 137-724 (KR); Lee, Junhak, Seocho-gu Seoul 137-724 (KR)
(74) Representative: Frenkel, Matthias Alexander

(57) **Abstract**

A method for processing an image and a multivision display system may be provided. The multivision display system may include a plurality of unit display devices and an image processing device to identify a format of the stereoscopic image data, to convert at least one frame included in the image data into a multivision frame having a multivision format, and to output the multivision frame to the plurality of the unit display devices. The multivision frame may have a same total number of sub-frames as a total number of the plurality of unit display devices.

## Description

### CROSS-REFERENCE TO RELATED APPLICATION

This application claims priority benefit from Korean Patent Application No. 10-2010-0081797, filed August 24, 2010, the subject matter of which is incorporated herein by reference.

### BACKGROUND

### 1. Field

Embodiments may relate to displaying an image on a plurality of display devices.

### 2. Background

Analog broadcasting has been changed into digital broadcasting in broadcasting environments. Contents for digital broadcasting have been increasing and kinds for digital broadcasting have been diversified, compared with contents and kinds for analog broadcasting. The 3-dimensional (3D) contents capable of providing realism and cubic-stereoscopic effect have been attracting more attention and may be more produced than 2-dimensional (2D) contents.

A method for processing 3-dimensional contents for output via a multivision display system has not been developed. A method for processing images applied to 2-dimensional contents has been applied to the 3-dimensional contents as it is. However, users may have difficulties in viewing the 3-dimensional contents.

### BRIEF DESCRIPTION OF THE DRAWINGS

Arrangements and embodiments may be described in detail with reference to the following drawings in which like reference numerals refer to like elements and wherein:

FIG. 1 is a diagram illustrating a multivision display device to output 3-dimensional contents;

FIG. 2 is a diagram illustrating a unit display device according to an embodiment;

FIG. 3 is a diagram illustrating perspective based on an interval or time difference (hereafter interval) of left-view image data and right-view image data;

FIG. 4 is a flowchart illustrating image-processing 3-dimensional image data that is performed by a multivision display system according to an exemplary embodiment;

FIG. 5 is a diagram illustrating formats of image data including left-view image data and right-view image data;

FIG. 6 is a diagram illustrating a multivision display system according to an embodiment;

FIG. 7 is a diagram illustrating converting formats to output 3-dimensional image data to unit display devices according to an embodiment;

FIG. 8 is a diagram illustrating converting formats to output 3-dimensional image data to unit display devices according to an embodiment;

FIG. 9 is a diagram illustrating 3-dimensional image data outputted by a multivision display system according to an embodiment; and

FIG. 10 is a diagram illustrating shutter glasses according to an embodiment.

### DETAILED DESCRIPTION

Embodiments of the present invention may disclose a method for processing images performed by a multivision display system to output 3-dimensional contents, and a display device enabling the method.

Reference may now be made in detail to specific embodiments, examples of which may be illustrated in the accompanying drawings. Wherever possible, same reference numbers may be used throughout the drawings to refer to the same or like parts. Although terms may be selected from generally known and used terms, some of the terms mentioned in the description may have been selected by the applicant, the detailed meanings of which are described in relevant parts of the description herein. Further, embodiments may be understood, not simply by the actual terms used but by meanings of each term lying within.

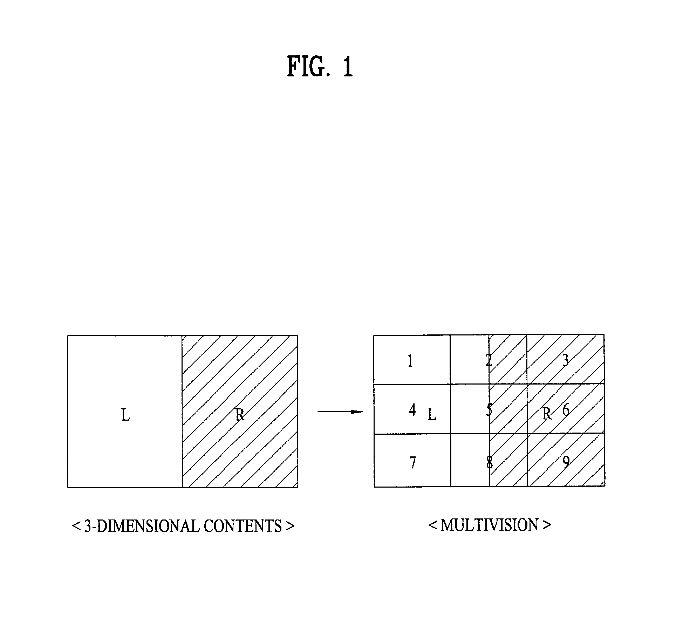

FIG. 1 is a diagram illustrating 3-dimensional (3D) contents outputted by a multivision display system. Other arrangements may also be provided.

FIG. 1 shows that a multivision display system may transmit 3-dimensional contents after scaling to unit display devices 1, 2, 3, 4, 5, 6, 7, 8, and 9. Each of the unit display devices 1, 2, 3, 4, 5, 6, 7, 8 and 9 may display only a predetermined area out of a full area of the 3-dimensional contents. For example, unit display 1 may display a predetermined area corresponding to'1' of the 3-dimensional contents and unit display device 9 may display a predetermined area corresponding to '9' of the 3-dimensional contents.

The multivision display system may have a disadvantage of failure to normally output the 3-dimensional contents. For example, the unit display devices that form the multivision display system may have to output left-view image data and right-view image data in order to output the 3-dimensional contents in a stereoscopic system. If the 3-dimensional contents are divided to be displayed by the unit display devices, respectively, the left-view image data and the right-view image data may fail to be displayed by a single unit display device, and the 3-dimensional contents may fail to be properly outputted.

For example, if side-by-side-formatted-3-dimensional contents are divided into 9 screens to be outputted by 9 unit display devices, respectively, as shown in FIG. 1, then the unit display devices 1, 4 and 7 may display only left-view image data, the unit display devices 3, 6 and 9 may display only right-view image data and the unit display devices 2, 5 8 may display wrong combinations of left-view image data and right-view image data. Accordingly, the 3-dimensional contents may fail to be displayed normally.

There may be a demand for development of a multivision display system that may convert and output format of 3-dimensional image data, suitable to a multivision display system that outputs 3-dimensional image data, to overcome such disadvantages.

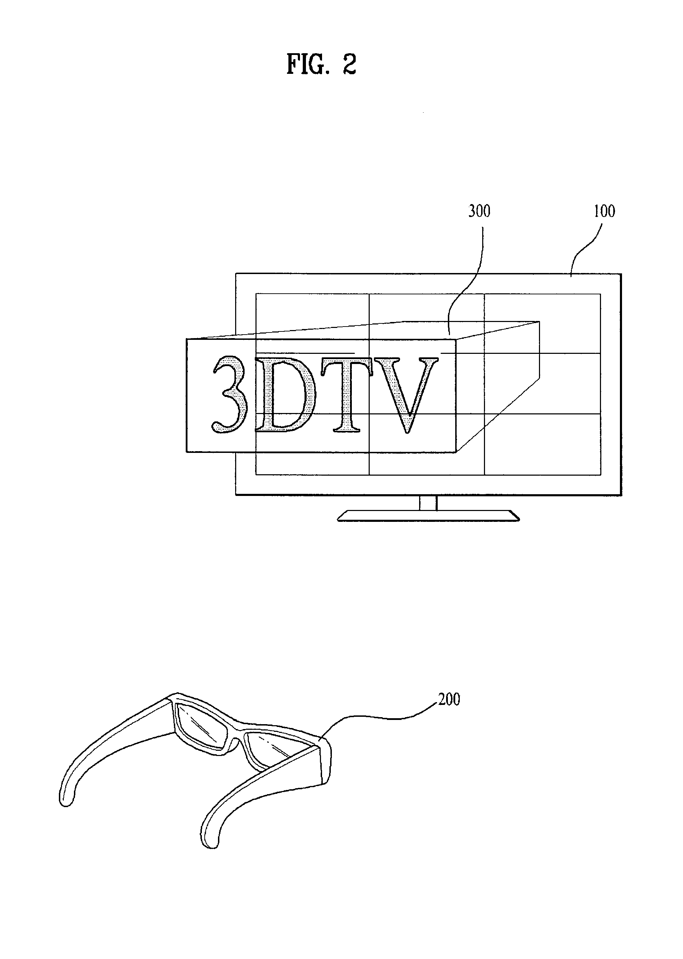

FIG. 2 is a diagram illustrating a multivision display system (having unit display devices) to provide 3-dimensional contents according to an embodiment. Other embodiments and configurations are also possible.

A glasses-wearing type and/or non-glasses-wearing type may be provided for 3-dimensional content viewing. The glasses-wearing type may be a passive type or an active type. According to the passive type, a polarizing filter may be used to distinguish left-view images from right-view images. A type of wearing color glasses having a blue and a red for both eyes, respectively, may correspond to the passive type.

According to the active type, a liquid crystal shutter may be used to distinguish a left eye from a right eye and the left eye and the right eye may be shut sequentially in time, to distinguish left-view images from right-view images. In other words, the active type may repeat the divided screens periodically and the user may view them, wearing the glasses having an electronic shutter installed therein, which may be synchronized in a period to operate. The active type may be called a 'time split type' or a 'shuttered glass type'.

The non-glass-wearing type may include a lenticular type and a parallax barrier type. In the lenticular type, a lenticular lens plate having a cylindrical lens arrays arranged thereon may be vertically installed in front of an image panel. In the parallax barrier type, a barrier layer having periodic slits may be provided on an image panel.

FIG. 2 illustrates a stereoscopic type of a 3D display, and more specifically an active type of the stereoscopic types. This embodiment relates to shutter-glasses as a medium of the active type, and embodiments are not limited thereto. As described below, embodiments may be applicable to using other mediums.

FIG. 2 shows that a multivision display device 100 (or multivision display system) may output 3D image data to a display and may generate a synchronization signal (Vsync) related to 3D image data to operate shutter glasses 200 so as to correspond to display synchronization of the outputted 3D image data. The multivision display device 100 may include a plurality of unit display devices. The multivision display device 100 may output the generated synchronization signal (Vsync) to an infrared (IR) emitter of the shutter glasses 200 to be able to be viewed corresponding to the display synchronization via the shutter glasses 200. The 3D image data may be stereoscopic image data.

The shutter glasses 200 may adjust an open period of a right or left eye shutter liquid crystal panel based on the synchronization signal received via the IR emitter. The open period may be suitable to synchronization of the 3D image data 300 outputted by the multivision display device 100.

The multivision display device 100 may process the 3D image data by using a principle of a stereoscopic type. According to the principle of the stereoscopic type, a single object may be photographed by two cameras located in different positions, and right-view image data and left-view image data may be generated. Each of the generated right-view image data and left-view image data may be separated and inputted to cross human right and left eyes at right angles, respectively. The image data inputted via the human right and left eyes may be combined in a human brain, to generate a perceived 3D image. The expression of 'cross human right and left eyes at right angles' may mean that each of the image data may not cause interference with each other.

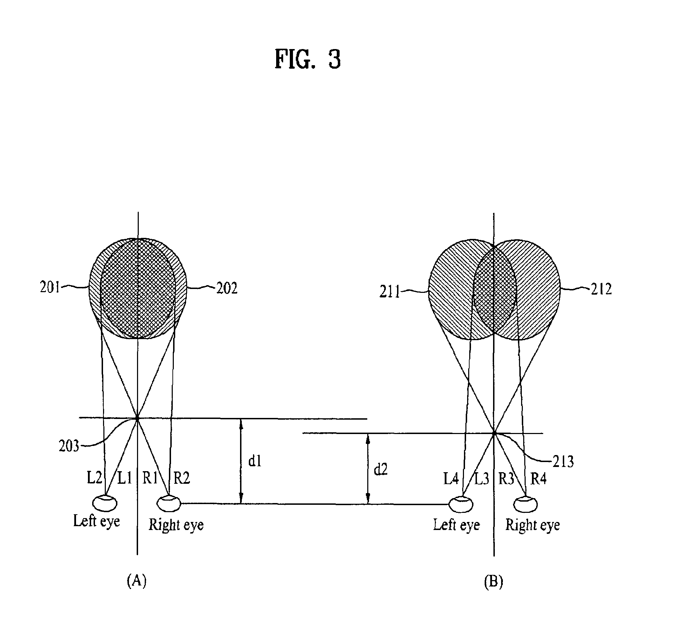

FIG. 3 is a diagram illustrating perspective based on an interval or time difference (hereafter 'interval') of right-view image data and left-view image data. Other configurations may also be possible.

FIG. 3(A) illustrates a location 203 of an image formed by a combination of both data, when an interval of right-view image data 201 and left-view image data 202 is narrow. FIG. 3(B) illustrates a location 213 of an image formed when an interval of right-view image data 211 and left-view image data 212 is wide.

In other words, FIGs. 3(A) and (B) show a level of perspective between the images formed at different locations based on the interval of the right-view image data and the left-view image data in the image signal processing device.

With reference to FIG. 3(A), when drawing expended lines (R1 and R2) toward a side and another side of the right-view image data 201 seen by a human right eye and expended lines (L1 and L2) toward a side and another side of the left-view image data 202 seen by the human left eye, the image may be formed at the location 203 at which the expended line (R1) for the right-view image data crosses the expended line (L1) for the left-view image data at a predetermined distance (d1) apart from the right and left eyes.

With reference to FIG. 3 (B), the image may be formed at the location 213 at which an expended line (R3) for the right-view image data crosses an expended line (L3) for the left-view image data at a predetermined distance (d2) apart from the right and left eyes.

It may be seen by comparing d1 (shown in FIG. 3 (A)) with d2 (shown in FIG. 3 (B)), which represents a distance to the locations 203 and 213 from the right and left eyes, d1 may be farther than d2 from the right and left eyes. That is, the image of FIG. 3 (A) may appear to be more distant from the right and left eyes than the image of FIG. 3 (B).

This may be caused by the interval of the right-view image data and the left-view image data (an east-to-west direction with respect to the drawings).

For example, the interval of FIG. 3 (A) between the right-view image data 201 and the left-view image data 202 may be relatively narrow, as compared with the interval of FIG. 3 (B) between the right-view image data 203 and the left-view image data 204.

As may be seen from FIGs. 3 (A) and 3 (B), as the interval between the image data is narrower, the image formed by the combination of the right-view image data and the left-view image data may appear to be more distant from the human eyes.

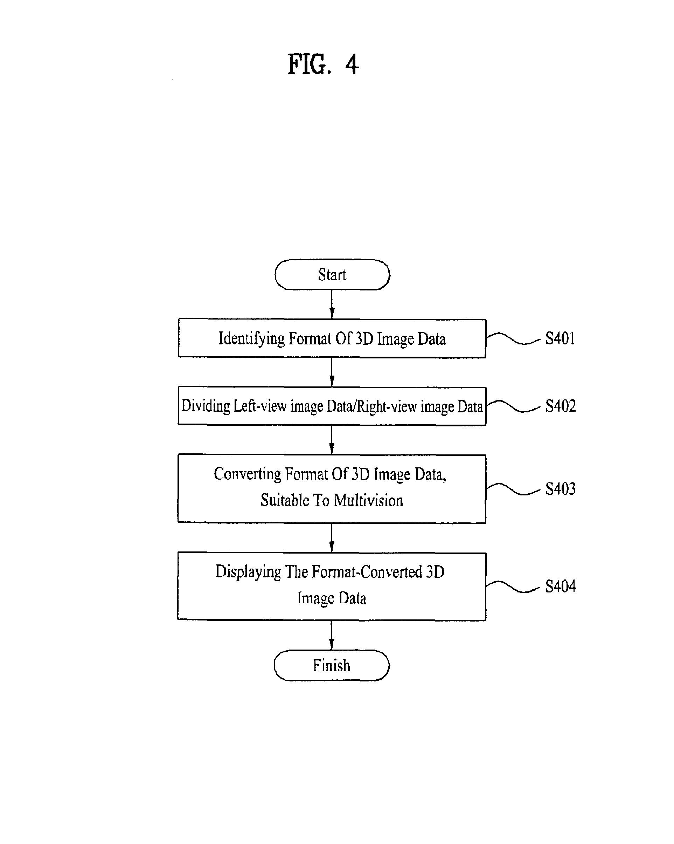

FIG. 4 is a flowchart illustrating processing 3D image data in a multivision display system according to an embodiment. Other embodiments, operations and configurations may also be provided.

With reference to FIG. 4, the multivision display system may identify a format of 3D image data to output.

When the 3D image data is received from an external input source, the multivision display system may receive format information of the 3D image data from the external input source. Alternatively, the multivision display system may include a module to determine a format of the 3D image data, and the multivision display system may determine a format of the 3D image data that is the output, by using the corresponding module.

The multivision display system may receive a format of the 3D image data that is selected by the user. The format of the 3D image data may be identified in operation S401.

The format of the 3D image data that is identified (in operation S401) may be a side-by-side format, a checker board format and/or a frame sequential format.

In operation S402, the multivision display system may divide (or separate) the 3D image data into right-view image data and left-view image data based on the identified format information (from operation S401).

For example, when the format of the 3D image data is the side by side format, a right area may be determined to be right-view image data and a left area may be determined to be left-view image data.

In operation S403, the multivision display system may divide (or separate) the left-view image data of the 3D image data into a plurality of first areas and may divide (or separate) the right-view image data of the 3D image data into a plurality of second areas corresponding to the plurality of the first areas. The first areas may be arranged adjacent to the second areas in opposition to the first areas, to convert the format of the 3D image data. In other words, the 3D image data may be converted into a format suitable to the multivision display system.

The converted format of the 3D image data may be determined based on a total number of the unit display devices included in the multivision display system and a format of the 3D image data. A stereoscopic image frame that includes a same number of sub-frames as the unit display devices out of the converted format may be referred to as a multivision frame. The multivision frame may have a multivision format that includes the same number of sub-frames as the number of the unit display devices, and the sub-frames may have the format of 3D image data.

For example, if the total number of unit display devices (included in the multivision display system) is 9 and the format of 3D image data is the side by side format or the top and bottom format, then left-view image data of the 3D image data may be divided (or separate) into three first areas and right-view image data may be divided (or separate) into three second areas. The first areas may be arranged adjacent to the corresponding second areas. The format of the 3D image data may be converted.

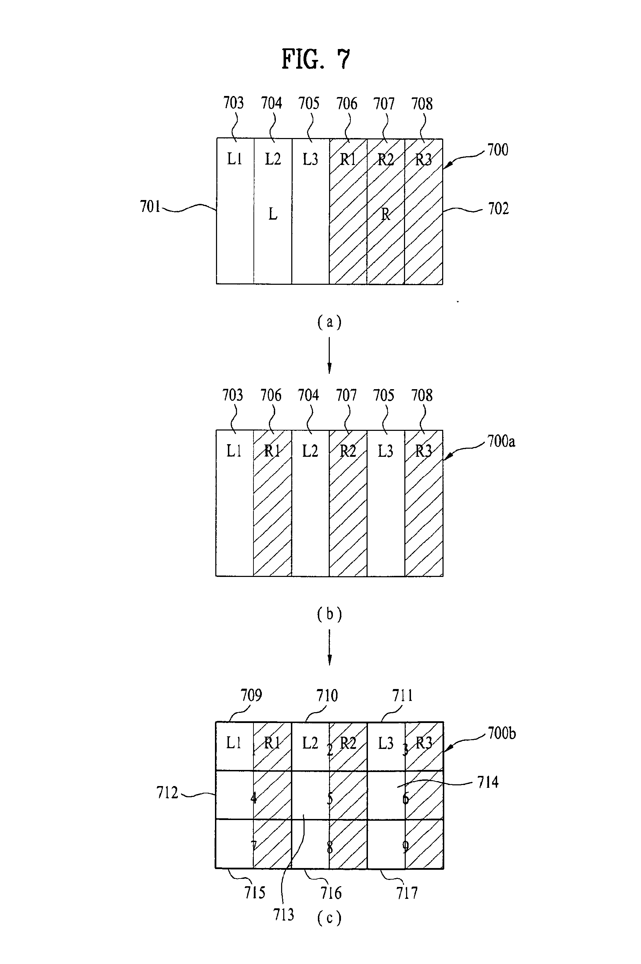

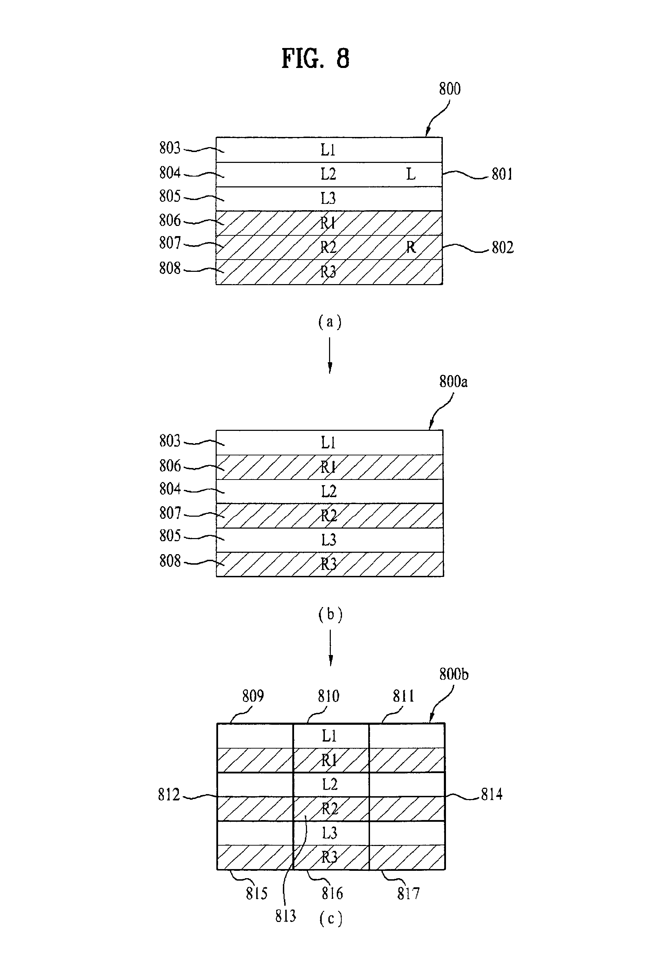

An embodiment of conversion of side by side format or top and bottom format 3D image data may be described below with reference to FIGs. 7 and 8.

In operation S404, the multivision display system may output (or display) the division areas of the stereoscopic image frame included in the format-converted 3D image data to the unit displays according to 3D format, respectively. The division areas may be sub-frames of a multivision frame. In other words, the multivision display system may display the format-converted 3D image data in operation S404.

The division areas of the stereoscopic image frame included in the format-converted 3D image data may include left-view image data of the first areas and right-view image data of the second areas corresponding to the first areas.

According to some embodiments, in operation S404, the multivision display system may output the stereoscopic image frames included in the format-converted 3D image data to the unit display devices, respectively, rather than outputting the division areas. Each of the unit display devices may display a specific division area from the output stereoscopic image frame. The stereoscopic image frame outputted by each of the unit display devices may be a multivision frame.

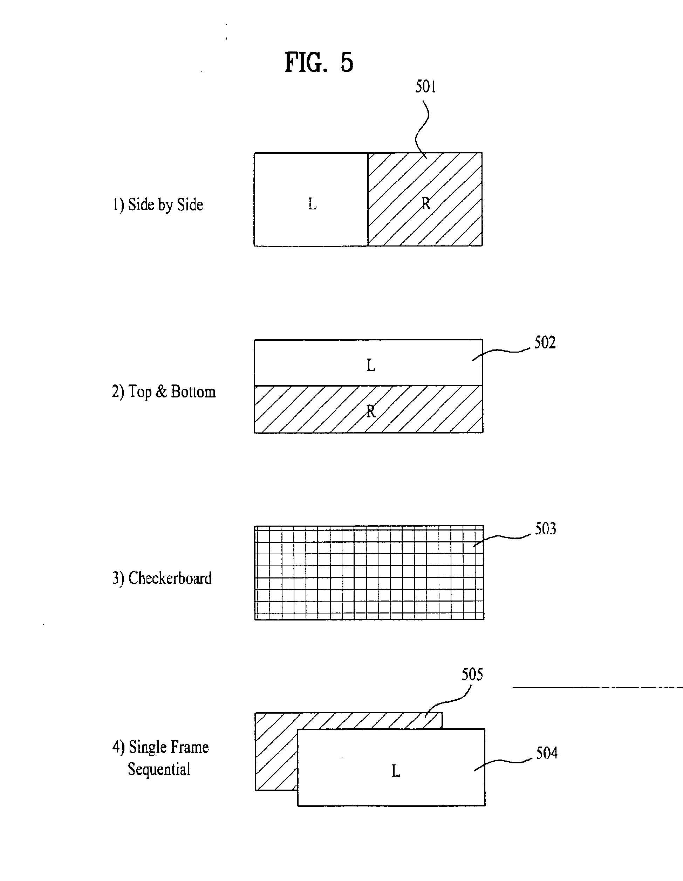

FIG. 5 is a diagram illustrating formats of image data including right-view image data and left-view image data. Other configurations may also be provided.

With reference to FIG. 5, 3D image data, 3D contents or 3D video signals may be classified into a variety of categories: (1) a side by side format 501 that allows two cameras to photograph a single object at different locations, to generate right-view image data and left-view image data and that separates to input the generated right-view image data and left-view image data from each other to cross right and left human eyes at right angles; (2) a top and bottom format 502 that allows two cameras to photograph a single object at different locations, to generate right-view image data and left-view image data, and that inputs the generated right-view image data and left-view image data sequentially in a top and bottom order; (3) a checkerboard format 503 that allows two cameras to photograph a single object at different locations, to generate right-view image data and left-view image data, and that inputs the generated right-view image data and left-view image data according to a checkerboard shape; (4) a frame sequential format 504 that allows two cameras to photograph a single object at different locations, to generate right-view image data and left-view image data, and that inputs the generated right-view image data and left-view image data according to a predetermined time difference. The right-view image data and left-view image data inputted according to the above formats may be combined in the human brain to be seen as a 3D image. Each of the frame 501, the frame 502 and the frame 503 may be a single stereoscopic image frame and the frame 504 and the frame 505 may be a single stereoscopic image.

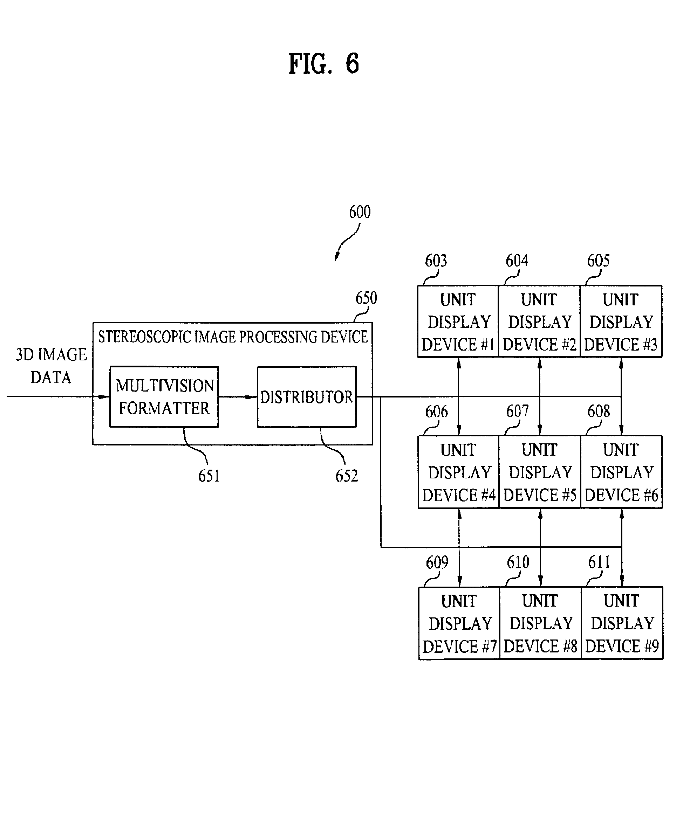

FIG. 6 is a diagram illustrating a multivision display system according to an embodiment. Other embodiments and configurations may also be provided.

FIG. 6 shows that a multivision display system 600 may include a stereoscopic image processing device 650 and a plurality of unit display devices 603, 604, 605, 606, 607, 608, 609, 610 and 611.

The stereoscopic image processing device 650 may identify a format of 3D image data, and may convert the format of the 3D image data. The stereoscopic image processing device 650 may output the format-converted 3D image data to the unit display devices 603, 604, 605, 606, 607, 608, 609, 610 and 611. The stereoscopic image processing device 650 may receive a broadcasting signal that includes 3D image data, and/or the stereoscopic image processing device 650 may receive 3D image data from a multi-media device. The stereoscopic image processing device 650 may have access to 3D image data stored in a storage medium. The stereoscopic image processing device 650 may include a multivision formatter 651, a distributor 652 and a scaler.

The multivision formatter 651 may divide (or separate) left-view image data (of the 3D image data) into a plurality of first areas and right-view image data (of the 3D image data) into a plurality of second areas corresponding to the first areas. The multivision formatter 651 may arrange the first areas and the second areas adjacent to each other, and then the multivision formatter 651 may convert formats of the 3D image data.

The multivision formatter 651 may determine a format of the 3D image data, and may determine left-view image data areas and right-view image data areas of the 3D image data. The format of the 3D image data may be determined to be a side by side format or a top and bottom format.

The format of the 3D image data converted by the multivision formatter 651 may be determined based on a total number of the unit display devices provided in the multivision display system and the format of the 3D image data.

The multivision formatter 651 may convert the format of the 3D image data into a multivision frame format. The multivision frame may include a same total number of sub-frames as the total number of the unit display devices, and each of the sub-frames may have the format of the 3D image data.

The distributor 652 may transmit the format-converted 3D image data to each of the unit display devices 603, 604, 605, 606, 607, 608, 609, 610 and 611. The distributor 652 may transmit a stereoscopic image frame included in the format-converted 3D image data to each of the unit display devices 603, 604, 605, 606, 607, 608, 609, 610 and 611. Alternatively, the distributor 652 may transmit a specific division area of the stereoscopic image frame to each of the unit display devices 603, 604, 605, 606, 607, 608, 609, 610 and 611.

Each of the unit display devices 603-611 may display a division area corresponding to the division area of the format-converted 3D image data based on the 3D format.

The division areas of the format-converted 3D image data may include left-view image data of the first areas and right-view image data of the second areas corresponding to the first areas. The division areas may be sub-frames of the multivision frame.

A time point of display of the division areas of the 3D image data outputted by the unit display devices 603, 604, 605, 606, 607, 608, 609, 610 and 611 may be synchronized. The unit display devices 603, 604, 605, 606, 607, 608, 609, 610 and 611 may synchronize the time point of display of the division areas and display the division areas at the synchronized time point.

FIG. 7 is a diagram illustrating converting a format to output 3D image data to unit display devices according to an embodiment. Other embodiments and configurations may also be provided.

With reference to FIG. 7 (a), the stereoscopic processing device 650 may divide 3D image data into left-view image data and right-view image data. In other words, the stereoscopic image processing device 650 may distinguish left-view image data and right-view image data of a stereoscopic frame 700 provided in the 3D image data. For example, when a format of the 3D image data is a side by side format, a left area of the stereoscopic frame 700 may be determined to be left-view image data 701 and a right area of the stereoscopic frame 700 may be determined to be right-view image data 702.

The stereoscopic processing device 650 may divide (or separate) the left-view image data 701 of the stereoscopic frame 700 into a plurality of first areas 703, 704 and 705, and the stereoscopic processing device 650 may divide (or separate) the right-view image data of the stereoscopic frame 700 into a plurality of second areas 706, 707 and 708 corresponding to the first areas.

With reference to FIG. 7 (b), the stereoscopic processing device 650 may arrange the first areas 703, 704 and 705 adjacent to the second areas 706, 707 and 708 corresponding to the first areas 703, 704 and 705, so as to convert the format of the 3D image data. For example, the first area 703 and the second area 706 corresponding to the first area 703 may be arranged adjacent to each other. The first area 704 and the second area 707 corresponding to the first area 704 may be arranged so as to be adjacent to each other. The format of the 3D image data may be converted as shown in FIG. 7 (b).

With reference to FIG. 7 (c), the stereoscopic image processing device 650 may output division areas of a stereoscopic image frame 700a included in the format-converted 3D image data to the unit display devices 603, 604, 605, 606, 607, 608, 609, 610 and 611, respectively. The stereoscopic image processing device 650 may include a scaler. The stereoscopic image processing device 650 may scale and then convert the stereoscopic image frame 700. The stereoscopic image processing device 650 may scale the converted stereoscopic image frame. That is, the stereoscopic image processing device 650 may scale the stereoscopic image frame 700a or the stereoscopic image frame 700b.

For example, after division areas 709 to 717 of the format-converted 3D image data as shown in FIG. 7 (b) are scaled to correspond to output sizes of the unit display devices 603, 604, 605, 606, 607, 608, 609, 610 and 611, a division area corresponding to each of the unit display devices 603, 604, 605, 606, 607, 608, 609, 610 and 611 is outputted to each of the unit display devices 603, 604, 605, 606, 607, 608, 609, 610 and 611.

According to the FIG. 6 embodiment, there may be nine unit display devices 603, 604, 605, 606, 607, 608, 609, 610 and 611. Accordingly, the stereoscopic image processing device 650 may divide (or separate) the stereoscopic frame 700a into nine sub-frames. The stereoscopic image processing device 650 may divide (or separate) areas 703 and 705 of the stereoscopic frame 700a into sub-frames 709, 712 and 715. The stereoscopic image processing device 650 may divide (or separate) areas 704 and 707 of the stereoscopic frame 700a into sub-frames 710, 713 and 716. The stereoscopic image processing device 650 may divide (or separate) areas 705 and 708 of the stereoscopic frame 700a into sub-frames 711, 714 and 717. As a result, the stereoscopic image processing device 650 may convert the stereoscopic image frame 700 into the multivision frame 700b. The total number of the unit display devices may be nine, although embodiments are not limited to the nine unit display devices. Corresponding to a various number of unit display devices, the stereoscopic frame may be converted into a corresponding multivision frame.

For example, when displaying 3D image data by using nine unit display devices, the stereoscopic image processing device 650 may output: a first area 709 of the format-converted 3D image data to a first unit display, a second area 710 to a second unit display device, a third area 711 to a third unit display device, a fourth area 712 to a fourth unit display device, a fifth area 713 to a fifth unit display device, a sixth area 714 to a sixth unit display device, a seventh area 715 to a seventh unit display device, an eighth area 716 to an eighth unit display device and a ninth area 717 to a ninth unit display device.

Each of the unit display devices may display a division area of the format-converted 3D image data. Each of the division areas may include left-view image data of the first areas 703, 704 and 705 and right-view image data of the second areas 706, 707 and 708 corresponding to the first areas 703, 704 and 705. Each of the division areas of the 3D image data may be outputted normally based on the 3D format.

For example, the first area 709 outputted to the first unit display device 603 may include left-view image data L1 of the first area 703 and right-view image data R1 of the second area 706 corresponding to the first area 703. Accordingly, the first unit display device 603 may display the division area 709 of the 3D image data in a 3D format.

When outputting the 3D image data according to an active type, frames outputted by the unit display devices (included in the multivision display system) may be synchronized in a time point of display.

Alternatively, the stereoscopic image processing device 650 may output the format-converted 3D image data to the unit display devices 603, 604, 605, 606, 607, 608, 609, 610 and 611, respectively. Each of the unit display devices 603, 604, 605, 606, 607, 608, 609, 610 and 611 may receive, from the stereoscopic processing device 650, information about division areas (or sub-frames) to display. Each of the unit display devices 603, 604, 605, 606, 607, 608, 609, 610 and 611 may enlarge and display the division areas (or sub-frames) corresponding thereto. Each of the unit display devices 603, 604, 605, 606, 607, 608, 609, 610 and 611 may include a scaler. Each of the unit display devices 603, 604, 605, 606, 607, 608, 609, 610 and 611 may include a signal processor, a tuner and/or a controller.

FIG. 8 is a diagram illustrating converting a format of 3D image data to output to unit display devices according to an embodiment. Other embodiments and configurations may also be provided.

With reference to FIG. 8 (a), the multivision display system may distinguish left-view image data and right-view image data of 3D image data based on determined format information of the 3D image data.

For example, when the format of the 3D image data is a top and bottom format, an upper area of a stereoscopic frame 800 included in the 3D image data may be determined to be left-view image data 801 and a lower area thereof may be determined to be right-view image data 802.

A unit display device may divide (or separate) the left-view image data 801 of the stereoscopic image frame 800 into a plurality of first areas 803, 804 and 805, and may divide (or separate) the right-view image data 802 into a plurality of second areas 806, 807 and 808 corresponding to the first areas.

With reference to FIG. 8 (b), the stereoscopic image processing device 650 may arrange the first areas 803, 804 and 805 adjacent to the second areas 806, 807 and 808 corresponding to the first areas, so as to convert a format of the 3D image data.

For example, a first area 803 and a second area 806 corresponding to the first area 803 may be arranged to be adjacent to each other, a first area 804 may be arranged to be adjacent to a second area 807 corresponding to the first area 804, and a first area 805 may be arranged to be adjacent to a second area 808 corresponding to the first area 805. Accordingly, the format of the 3D image data may be converted as shown in FIG. 8 (b).

As shown in FIG. 8 (c), the stereoscopic image processing device 650 may output the division areas 809 to 817 of a stereoscopic image frame 800a included in the format-converted 3D image data to the unit display devices 603, 604, 605, 606, 607, 608, 609, 610 and 611, respectively. The stereoscopic image processing device 650 may include a scaler. The stereoscopic image processing device 650 may scale and convert the stereoscopic image frame 800 or the stereoscopic image processing device 650 may scale the converted stereoscopic frame. That is, the stereoscopic image processing device 650 may scale the stereoscopic image frame 800a or the stereoscopic frame 800b.

For example, after scaling the division areas of the format-converted 3D image data to correspond to output sides of the unit display devices 603, 604, 605, 606, 607, 608, 609, 610 and 611 as shown in FIG. 8 (b), the division areas may be outputted to the corresponding unit display devices.

According to the FIG. 6 embodiment, nine unit display devices 603, 604, 605, 606, 607, 608, 609, 610 and 611 may be provided. Accordingly, the stereoscopic image processing device 650 may divide (or separate) the stereoscopic image frame 800a into nine sub-frames. The stereoscopic image processing device 650 may divide (or separate) areas 803 and 806 of the stereoscopic image frame 800a into sub-frames 809, 812 and 815. The stereoscopic image processing device 650 may divide (or separate) areas 804 and 807 of the stereoscopic image frame 800a into sub-frames 810, 813 and 816. The stereoscopic image processing device 650 may divide (or separate) areas 805 and 808 of the stereoscopic image frame 800a into sub-frames 811, 814 and 817. As a result, the stereoscopic image processing device 650 may convert the stereoscopic image frame 800 into the multivision frame 800b. In this example, the total number of the unit display devices is nine, although embodiments are not limited to the nine unit display devices. The stereoscopic image frame may be converted into the multivision frame corresponding to a various number of unit display devices.

For example, when displaying 3D image data by using nine unit display devices, the stereoscopic image processing device 650 may output: a first area 809 of a format-converted 3D image data to a first unit display device, a second area 810 of the format converted 3D image data to a second unit display, a third area 811 of the format converted 3D image data to a third unit display, a fourth area 812 of the format converted 3D image data to a fourth unit display, a fifth area 813 of the format converted 3D image data to a fifth unit display, a sixth area 814 of the format converted 3D image data to a sixth unit display device, a seventh area 815 of the format converted 3D image data to a seventh unit display device, an eighth area 816 of the format converted 3D image data to an eighth unit display device and a ninth area 817 of the format converted 3D image data to a ninth unit display device.

The unit display devices may display the division areas of the format-converted 3D image data, respectively, and each of the division areas may include left-view image data of the first areas 803, 804 and 805 and right-view image data of the second areas 806, 807 and 808. Accordingly, each of the division areas may be outputted normally in a 3D format.

For example, the first area 809 outputted to the first unit display device 603 may include the left-view image data L1 of the first area 803 and the right-view image data R1 of the second area 806 corresponding to the first area 803. Accordingly, the first unit display device 603 may output the division area 809 of the 3D image data in the 3D format.

At this time, when outputting 3D image data according to an active type, frames outputted by the unit display devices may be synchronized in a time point of display and may be outputted.

Alternatively, the stereoscopic image processing device 650 may output the format-converted 3D image data to the unit display devices 603, 604, 605, 606, 607, 608, 609, 610 and 611, respectively. Each of the unit display devices 603, 604, 605, 606, 607, 608, 609, 610 and 611 may receive, from the stereoscopic processing device 650, information on a division area (or sub-frame) to display, and each of the unit display devices 603-611 may enlarge and display the division area (or sub-frame) corresponding thereto. Each of the unit display devices 603, 604, 605, 606, 607, 608, 609, 610 and 611 may include a scaler. Each of the unit display devices 603, 604, 605, 606, 607, 608, 609, 610 and 611 may include a signal processor, a tuner and/or a controller.

The format of the 3D image data may be converted and outputted, suitable to the multivision display system, when outputting 3D image data. Accordingly, the multivision display system may advantageously output 3D image data.

When outputting the 3D image data according to the side by side format or the top and bottom format, the format of the 3D image data may be converted corresponding to the total number of the unit display devices that form the multivision display system. The division areas may be outputted by the unit display devices, respectively, such that the multivision display system may advantageously output 3D image data.

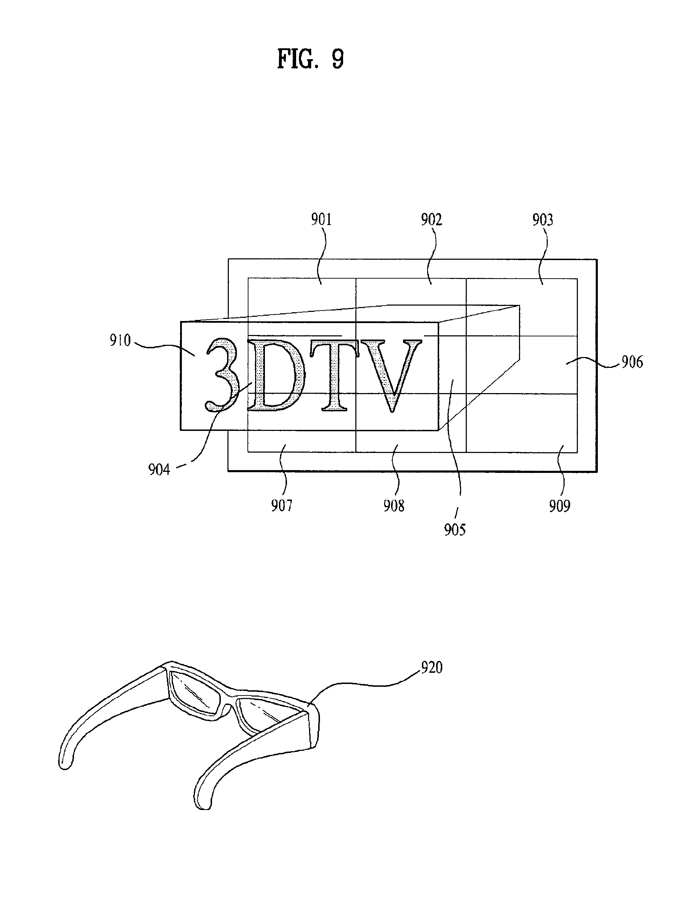

FIG. 9 is a diagram illustrating 3D image data outputted by a multivision display system according to an embodiment. Other embodiments and configurations may also be provided.

With reference to FIG. 9, the multivision display system may output division areas of 3D image data 910 to unit display devices 901, 902, 903, 904, 905, 906, 907, 908, 909, respectively.

The 3D image data 910 may be format-converted by the multivision formatter 651 to be outputted according to the 3D format by the unit display devices. The 3D image data 910 may include a multivision frame, and the division areas 901, 902, 903, 904, 905, 906, 907, 908, 909 may be sub-frames included in the multivision frame.

Each of the unit display devices 901, 902, 903, 904, 905, 906, 907, 908, 909 may include an image processor configured to process an image according to a display panel and a user's setting, a 3D format converter configured to convert a format of the division area of the 3D image data into a 3D display format of display panel, a display to output the 3D format-processed 3D image data, a user input unit to receive the user's input and a scaler configured to scale the division area of the 3D image data. The unit display devices 901, 902, 903, 904, 905, 906, 907, 908, 909 may include other components.

An active type multivision display system may output 3D image data to each of the unit display devices. The active type multivision display system may generate a synchronization signal (Vsync) related to 3D image data to correspond to 3D image data display synchronization and shutter open interval synchronization of shutter glasses 920 when the user viewing the output 3D image data wears the shutter glasses 920. The multivision display system may output the generated synchronization signal (Vsync) to an IR emitter included in the shutter glasses, such that the user may view the 3D image data, with display synchronization suitable by the shutter glasses 920.

The IR emitter may receive the synchronization signal generated by each of the unit display devices to output to a light receiver included in the shutter glasses 920. The shutter glasses 920 may adjust the shutter open interval based on the synchronization signal received from the IR emitter via the light receiver, and the shutter glasses 920 may enable the shutter open interval to be suitable to synchronization of the 3D image data 910 displayed by the unit display devices.

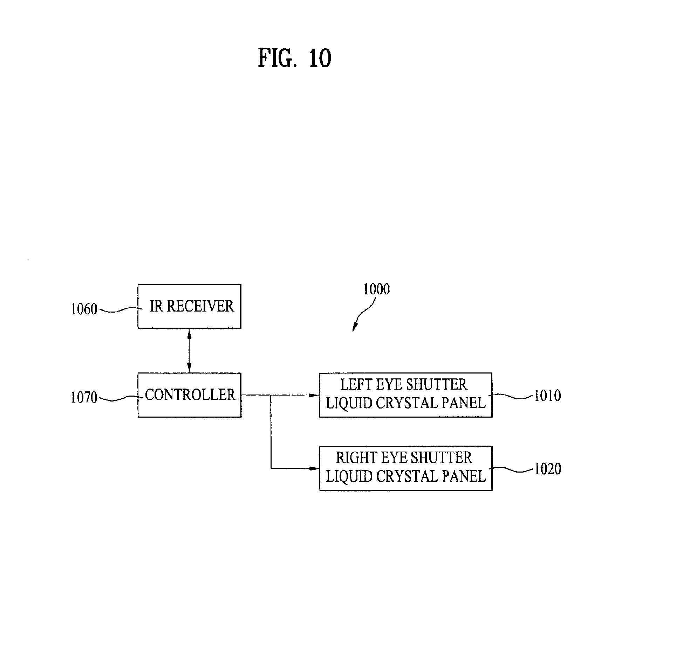

FIG. 10 is a diagram illustrating a configuration of shutter glasses according to an embodiment. Other embodiments and configurations may also be provided.

With reference to FIG. 10, a shutter glasses 1000 may include a left eye shutter liquid crystal panel 1010 and a right eye shutter liquid crystal panel 1020. The shutter liquid crystal panels 1010 and 1020 may allow light to simply transmit therethrough or to shut according to a source driving voltage. When left-view image data is displayed on the multivision display system, the left eye shutter liquid crystal panel 1010 may transmit light and the right eye shutter liquid crystal panel 1020 may shut the light transmission to allow left-view image data to be transmitted only to a left eye of the shutter-glass-wearer. When right-view image data is displayed on the multivision display system, the left eye shutter liquid crystal panel 1010 may shut light transmission and the right eye shutter liquid crystal panel 1020 may transmit light to allow right-view image data to be transmitted only to a right eye of the shutter-glass-wearer.

An infrared ray receiver 1060 of the shutter glasses 1000 may convert an infrared ray signal received from the multivision display system into an electronic signal, and the electronic signal may be provided to a controller 1070. The controller 1070 may control the left eye shutter liquid crystal panel 1010 and the right eye shutter liquid crystal panel 1020 to be one and off alternatively according to a synchronization reference signal.

The shutter glasses 1000 may transmit light through the left eye shutter liquid crystal panel 1010 or the right eye shutter liquid crystal panel 1020 or may shut lights according a control signal from the multivision display system.

In at least one embodiment, each unit display device may include a separate stereoscopic image processing device and may communication by HDMI.

Embodiments may be directed to a stereoscopic image processing device, a method for processing a stereoscopic image and/or a multivision display system.

An embodiment may provide a stereoscopic image processing device, a method for processing a stereoscopic image and a multivision display system that is able to convert a format of 3D image data into a format suitable to a multivision display system when outputting 3D image data, to enable the multivision display system to display 3D image data.

A method may be provided for outputting stereoscopic image data to a plurality of unit display devices. This may include identifying a format of the stereoscopic image data and converting one or more frames included in the stereoscopic image data into a multivision frame having multivision format. The multivision format may include a same number of sub-frames as a number of the unit display devices, and the sub-frame has the identified format. The method may also include outputting the multivision frame to the plurality of the unit display devices. The sub-frame may include left-view image data and right-view image data. One of the sub-frames may include data to be displayed in an area that one of the unit display devices may display. The format of the stereoscopic image data may be one of a side by side format or a top and bottom format.

The converting may include identifying left-view image data and right-view image data from the one or more frames included in the stereoscopic image data using the identified format, dividing the identified left-view image data and the identified right-view image data, and arranging the divided left-view image data and the divided right-view image data to cross each other. The dividing may include dividing the left-view image data and the right-view image data based on the number of the unit display devices.

The method may further include scaling the stereoscopic image data.

A stereoscopic image processing device may be provided to output stereoscopic image data to a plurality of unit display devices. The stereoscopic image processing device may include a multivision formatter to identify a format of the stereoscopic image data, and convert one or more frames included in the stereoscopic image data into a multivision frame having a multivision format. The multivision format may include a same number of sub-frames as a number of the unit display devices, and the sub-frame has the identified format. A distributor may output the multivision frame to the plurality of the unit display devices. The sub-frame may include left-view image data and right-view image data. One of the sub-frames may include data that may be displayed in an area that one of the unit display devices may display. The format of the stereoscopic image may be a side by side format or a top and bottom format.

The multivision formatter may identify left-view image data and right-view image data from the one or more frames using the identified format, divide the identified left-view image data and the identified right-view image data, and arrange the divided left-view image and the divided right-view image data to cross each other. The multivision formatter may divide the left-view image data and the right-view image data based on the number of the unit display devices.

The stereoscopic image processing device may further include a scaler to scale the stereoscopic image data.

A multivision display system may include a plurality of unit display devices and a stereoscopic image processing device to identify a format of the stereoscopic image data, to convert one and more frames included in the stereoscopic image data into a multivision frame having a multivision format, and to output the multivision frame to the plurality of the unit display devices. The multivision format may include the same number of sub-frames as the number of the unit display devices, and the sub-frame may have the identified format.

Each of the plurality of unit display devices may receive the multivision frame, and display one of sub-frames included in the multivision frame.

Each of the plurality of unit display devices may receive one of sub-frames included in the multivision frame, and display the received sub-frame.

The plurality of unit display devices may synchronize a display of a sub-frame included in the multivision frame.

Each of the plurality of unit display devices may include a scaler to scale the sub-frames.

The multivision display system may further include glasses for viewing the stereoscopic image displayed on the plurality of unit display devices.

When outputting 3D image data, a format of the 3D image data may be converted and outputted, suitable to a multivision display system. The multivision display system may normally output 3D image data.

Further, when outputting side by side or top and bottom format 3D image data, a format of the 3D image data may be converted corresponding to the number of unit display devices that form the multivision display system. After that, division areas may be outputted on the unit display devices, respectively. As a result, the multivision display system may normally output 3D image data.

Any reference in this specification to "one embodiment," "an embodiment," "example embodiment," etc., means that a particular feature, structure, or characteristic described in connection with the embodiment is included in at least one embodiment of the invention. The appearances of such phrases in various places in the specification are not necessarily all referring to the same embodiment. Further, when a particular feature, structure, or characteristic is described in connection with any embodiment, it is submitted that it is within the purview of one skilled in the art to affect such feature, structure, or characteristic in connection with other ones of the embodiments.

Although embodiments have been described with reference to a number of illustrative embodiments thereof, it should be understood that numerous other modifications and embodiments can be devised by those skilled in the art that will fall within the spirit and scope of the principles of this disclosure. More particularly, various variations and modifications are possible in the component parts and/or arrangements of the subject combination arrangement within the scope of the disclosure, the drawings and the appended claims. In addition to variations and modifications in the component parts and/or arrangements, alternative uses will also be apparent to those skilled in the art.

## Claims

1. A method for providing image data to a plurality of unit display devices, the method comprising:
identifying a format of the image data, the image data including first image data and second image data for displaying a perceived three-dimensional (3D) image;
converting at least one frame included in the received image data into a multivision frame having a multivision format, the multivision format including a same total number of sub-frames as a total number of the unit display devices, and the sub-frame having the identified format; and
outputting the multivision frame to the plurality of the unit display devices.

2. The method of claim 1, wherein the sub-frame comprises left-view image data and right-view image data.

3. The method of claim 1, wherein one of the sub-frames comprises data displayed in an area that one of the unit display devices will display.

4. The method of claim 1, wherein the format of the image data is a side by side format or a top and bottom format.

5. The method of claim 1, wherein converting the at least one frame comprises:
identifying left-view image data and right-view image data from the at least one frame based on the identified format;
dividing the identified left-view image data and the identified right-view image data; and
arranging the divided left-view image data and the divided right-view image data to cross each other.

6. The method of claim 5, wherein dividing the identified left-view image data and the identified right-view image data comprises separating the left-view image data and the right-view image data based on the total number of the unit display devices.

7. The method of claim 1, further comprising:
scaling the image data.

8. The method of claim 1, further comprising displaying the multivision frame on the plurality of the unit display devices.

9. A multivision display system comprising:
an image processing device to identify a format of the image data, to convert at least one frame included in the image data into a multivision frame having a multivision format, and the image processing device to output the multivision frame,
wherein the multivision format includes a same total number of sub-frames as a desired total number of unit display devices, and the sub-frame has the identified format.

10. The multivision display system of claim 9, further comprising:
a plurality of unit display devices to receive the multivision frame, and one of the unit display devices to display one of sub-frames included in the multivision frame.

11. The multivision display system of claim 10, wherein each of the plurality of the unit display devices receives a corresponding one of sub-frames included in the multivision frame and displays the received corresponding sub-frame.

12. The multivision display system of claim 10, wherein the plurality of the unit display devices synchronizes a display of the multivision frame.

13. The multivision display system of claim 10, wherein each of the plurality of the unit display devices includes a scaler to scale the sub-frames.

14. The multivision display system of claim 10, further comprising:
glasses for viewing images displayed on the plurality of the unit display devices.

15. The multiviosn display system of claim 9, wherein the sub-frame comprises left-view image data and right-view image data.
